# EUROPÄISCHE PATENTANMELDUNG

(11) **EP 4 342 775 A1**
(43) Veröffentlichungstag der Anmeldung: **27.03.2024**
(21) Anmeldenummer: 23196884.3
(22) Anmeldetag: 12.09.2023
(51) Int. Cl.: B62J 15/00, B62J 45/00

(54) **FAHRZEUG MIT DATENERFASSUNGSEINHEIT**

(30) Priorität: 14.09.2022 AT 507062022
(71) Anmelder: KTM AG, 5230 Mattighofen (AT)
(72) Erfinder: SCHAIDREITER, Christian, 5020 Salzburg (AT)
(74) Vertreter: Torggler & Hofmann Patentanwälte - Innsbruck

(57) **Zusammenfassung**

Fahrzeug (1), insbesondere einspuriges Fahrzeug, aufweisend
- wenigstens eine Vorderradgabel (2), geeignet zum Lagern eines Vorderrads (3),
- wenigstens einen Kotflügel (4), der an der Vorderradgabel (2) angebracht ist,
- eine Datenerfassungseinheit (5) mit zumindest einem Sensor zur Erfassung von Daten betreffend das Fahrzeug (1) und/oder die Umgebung,
wobei die Datenerfassungseinheit (5) einen an einer Oberseite des Kotflügels (4) vor der Vorderradgabel (2), vorzugsweise im Wesentlichen zentral, angeordneten Satellitensignalempfänger (8) umfasst.

## Beschreibung

Die vorliegende Erfindung betrifft ein Fahrzeug gemäß den Merkmalen des Oberbegriffs des Anspruch 1, eine Datenerfassungseinheit, die Verwendung einer Datenerfassungseinheit bei einem Fahrzeug und ein Verfahren zum Betreiben einer Datenerfassungseinheit bei einem Fahrzeug.

Bei Fahrzeugen ist es üblich geworden, bestimmte Daten das Fahrzeug und/oder die Umgebung betreffend, wie z. B. die Umgebungstemperatur, die Geschwindigkeit, den Neigungswinkel und die Position des Fahrzeugs, während der Fahrt zu erfassen, zu speichern und an einen Computer, ein Notebook, ein Smartphone oder dergleichen zu übermitteln und/oder auszuwerten.

Dabei können von den aufgezeichneten Daten weitere Daten und/oder Parameter abgeleitet werden, wie z. B. Durchschnittsgeschwindigkeiten, Höhenprofile, Beschleunigungsprofile, Strecken- oder Routenaufzeichnungen (Tracking), insbesondere auch Live-Tracking, oder dergleichen mehr.

Für die Erfassung der Daten sind üblicherweise Datenbestimmungseinheiten vorgesehen, welche Sensoren und/oder Empfänger zum Aufzeichnen der Daten das Fahrzeug und/oder die Umgebung betreffend, Speichereinheiten zum Speichern der Daten, Schnittstellen zum Übertragen der Daten und/oder Recheneinheiten zum Verarbeiten der Daten umfassen.

Eine exakte Positions- bzw. Lagebestimmung ist dabei ausschlaggebend für eine qualitativ hochwertige Ermittlung einer Vielzahl dieser Daten. Daher kommt dem Satellitensignalempfänger eine große Bedeutung zu.

Als Satellitensignalempfänger ist eine Einheit zu verstehen, welche üblicherweise zumindest eine Antenne und eine Stromversorgungseinheit umfasst.

Mittels eines Satellitensignalempfängers, insbesondere durch eine Antenne, können Signale eines Globalen Satellitennavigationssystems (Global Navigation Satellite System - GNSS), beispielsweise eines Globalen Positionierungssystems (Global Positioning System - GPS), empfangen werden.

Es hat sich herausgestellt, dass die Anordnung des Satellitensignalempfängers am Fahrzeug ausschlaggebend für einen störungsfreien Satellitensignalempfang und folglich für eine exakte Positionsbestimmung des Fahrzeugs ist.

Dabei ist es wichtig, dass der Satellitensignalempfänger zu jeder Zeit so wenig wie möglich von Bauteilen des Fahrzeugs und/oder der Fahrerin verdeckt wird.

Das heißt, in anderen Worten, dass der Raum zum freien Himmel hin zu jeder Zeit so groß wie möglich sein sollte um eine Abschattung und/oder Abschirmung von Satellitensignalen, beispielsweise von GPS-Signalen, zu vermeiden.

Eine Satellitensignalabschattung wird zum Beispiel durch das Vornüberbeugen der Fahrerin über den Lenker verursacht, was insbesondere bei einem typischen Fahrverhalten auf Enduro- und/oder Motocross-Motorrädern vorkommt, und/oder durch das Abdecken des Satellitensignalempfängers durch ein Bauteil und/oder Abdeckungselement des Fahrzeugs selbst.

Untersuchungen der Erfinderin haben gezeigt, dass hingegen Dreck und dergleichen den Satellitensignalempfang nicht merkbar beeinflussen.

Des Weiteren sollte der Satellitensignalempfänger so am Fahrzeug angeordnet sein, dass er nicht leicht abgestoßen und/oder abgerissen werden kann und/oder die Fahrerin durch den Satellitensignalempfänger nicht beeinträchtigt und/oder gestört wird.

Untersuchungen der Erfinderin zeigten, dass eine Anordnung am Heck eines Fahrzeugs, insbesondere bei einspurigen Fahrzeugen, hierzu als ungünstig angesehen werden kann.

Aus dem Stand der Technik sind Datenerfassungseinheiten mit Satellitensignalempfängern bei Fahrzeugen bekannt, wie z. B. von der Patentschrift AT 523996 A1 (KTM AG), welche die technischen Funktionen einer Datenerfassungseinheit, also die Datenerfassung, -speicherung, -übertragung etc. umfasst.

Jedoch wurde hier der optimalen Anordnung des Satellitensignalempfängers am Fahrzeug zu wenig Bedeutung beigemessen, sodass bei der in der AT 523996 A1 (KTM AG) gewählten Position des Satellitensignalempfängers das Problem der Satellitensignalabschattung bestehen könnte.

Aufgabe der vorliegenden Erfindung ist es daher, eine zum Stand der Technik verbesserte und generell vorteilhafte Anordnung des Satellitensignalempfängers bei Fahrzeugen in Verbindung mit einer vorteilhaften Ausführung der Datenerfassungseinheit für Fahrzeuge, insbesondere einspurige Fahrzeuge wie (E-)Motorräder und/oder Fahrräder, bereitzustellen.

Diese Aufgabe wird durch die Merkmale des Anspruchs 1 gelöst, nämlich durch ein Fahrzeug, insbesondere ein einspuriges Fahrzeug, aufweisend
- wenigstens eine Vorderradgabel, geeignet zum Lagern eines Vorderrads,
- wenigstens einen Kotflügel, der an der Vorderradgabel angebracht ist,
- eine Datenerfassungseinheit mit zumindest einem Sensor zur Erfassung von Daten betreffend das Fahrzeug und/oder die Umgebung,
dadurch gekennzeichnet, dass die Datenerfassungseinheit einen an einer Oberseite des Kotflügels vor der Vorderradgabel, vorzugsweise im Wesentlichen zentral, angeordneten Satellitensignalempfänger umfasst.

Schutz wird auch begehrt für eine Datenerfassungseinheit mit zumindest einem Sensor zur Erfassung von Daten betreffend ein, insbesondere einspuriges, Fahrzeug und/oder die Umgebung, bestehend aus einer Speichereinheit und einem Satellitensignalempfänger, dadurch gekennzeichnet, dass der Satellitensignalempfänger, vorzugsweise separat von der Speichereinheit, an einer Oberseite des Kotflügels vor der Vorderradgabel, vorzugsweise im Wesentlichen zentral, angeordnet ist.

Des Weiteren wird Schutz begehrt für die Verwendung einer erfindungsgemäßen Datenerfassungseinheit bei einem Fahrzeug.

Weiters wird Schutz begehrt für ein Verfahren zum Betreiben einer erfindungsgemäßen Datenerfassungseinheit bei einem Fahrzeug, wobei der Satellitensignalempfänger
- räumlich getrennt von der Speichereinheit am Fahrzeug angeordnet wird, und
- an einer Oberseite eines Kotflügels vor der Vorderradgabel, vorzugsweise im Wesentlichen zentral, angeordnet wird.

Das erfindungsgemäße Fahrzeug ist vorzugsweise ein einspuriges Fahrzeug, insbesondere ein (E-)Motorrad, wie beispielsweise ein Enduro- oder ein Motocross-Motorrad, oder ein (E-)Fahrrad.

Es wäre auch denkbar, dass das Fahrzeug ein (E-)Schneemotorrad oder ein (E-)Schneefahrrad ist.

Das Fahrzeug besitzt wenigstens eine Vorderradgabel, welche wenigstens einen Gabelholm, vorzugsweise zwei mit zwei Gabelbrücken verbundene Gabelholme, umfasst.

Das Fahrzeug besitzt vorzugsweise einen Lenker, der im Wesentlichen über der Vorderradgabel angeordnet ist.

Der an der Vorderradgabel angebrachte Kotflügel kann je nach Aufbau des Fahrzeugs einen oben liegenden Teilumfang eines Vorderrads überlappen.

Es ist zu erwähnen, dass der Kotflügel nicht unmittelbar an der Vorderradgabel angebracht sein muss. Durchaus können Zwischenbauteile vorhanden sein, über welche der Kotflügel an der Vorderradgabel angebracht ist.

Bevorzugt kann der Kotflügel an einer Gabelbrücke der Vorderradgabel mittelbar oder unmittelbar angebracht sein.

Über dem Kotflügel vor der Vorderradgabel kann ein Abdeckungselement, wie z. B. eine Lichtmaske und/oder eine Startnummerntafel und/oder ein Verkleidungselement, beispielsweise zur Verkleidung eines Fahrzeugrahmens, angeordnet sein.

Besonders bevorzugt weist die Datenerfassungseinheit zumindest einen Sensor, wie z.B. einen Beschleunigungssensor und/oder einen Temperatursensor und/oder einen Neigungssensor, auf.

Besonders bevorzugt beinhaltet der zumindest eine Sensor den Satellitensignalempfänger.

Der zumindest eine Sensor der Datenerfassungseinheit kann zusätzlich beispielsweise die folgenden das Fahrzeug und/oder die Umgebung betreffenden Daten erfassen: Lufttemperatur, Luftfeuchtigkeit, Geschwindigkeit, Beschleunigung, Neigungswinkel, Motordrehzahl, Magnetfeld, etc.

Es ist besonders bevorzugt vorgesehen, dass die Datenerfassungseinheit eine Speichereinheit aufweist.

Es ist bevorzugt vorgesehen, dass die Speichereinheit und der Satellitensignalempfänger separat voneinander ausgeführt und/oder angeordnet sind.

Die besonders bevorzugte Aufteilung der Datenerfassungseinheit in eine Speichereinheit und einen Satellitensignalempfänger besitzt den großen Vorteil, dass die Speichereinheit und der Satellitensignalempfänger jeweils günstig und/oder räumlich getrennt voneinander am Fahrzeug angeordnet werden können.

Der Satellitensignalempfänger kann ein alleinstehendes Bauteil sein oder auch ein Teil einer größeren Einheit, vorzugsweise der Datenerfassungseinheit, sein, welche zusätzlich zum Satellitensignalempfänger weitere Sensoren und/oder einen Stromanschluss etc. umfassen kann.

Die Speichereinheit kann ein alleinstehendes Bauteil oder auch ein Teil einer größeren Einheit, vorzugsweise der Datenerfassungseinheit, sein.

Die Speichereinheit betreffend ist eine vorteilhafte Anordnung am Fahrzeug eine Anordnung an einer Stelle, die leicht zugänglich ist und gleichzeitig von äußeren Einflüssen geschützt ist.

Unter externen Einflüssen können beispielsweise die Fahrerin des Fahrzeugs, eine andere Fahrerin, Steine, Sträucher und vieles mehr verstanden werden.

Im Allgemeinen kann die Speichereinheit jedoch überall am Fahrzeug angeordnet werden.

Beispielsweise kann der Bereich zwischen den Gabelholmen und einem Abdeckungselement eines, insbesondere einspurigen, Fahrzeugs, insbesondere im Bereich zwischen zwei Gabelbrücken, als vorteilhaft für die Anordnung der Speichereinheit angesehen werden.

Eine weitere Möglichkeit einer vorteilhaften Anordnung der Speichereinheit ist im Bereich rund um den Lenker.

Dabei ist es vorteilhaft, wenn die Speichereinheit an einem Randbereich des Bereichs zwischen den Gabelholmen und einem Abdeckungselement oder des Bereichs rund um den Lenker angeordnet ist, sodass es für die Fahrerin und/oder Bedienerin leicht möglich ist, die Speichereinheit zu bedienen und/oder zu befestigen und/oder zu lösen.

Dabei ist es des Weiteren vorteilhaft, dass die Speichereinheit räumlich nicht über die Seitenränder eines Abdeckungselements hinausragt, sondern zur Gänze vom Abdeckungselement verdeckt und/oder geschützt ist.

Generell ist es auch möglich, die Speichereinheit innerhalb eines weiteren, insbesondere Schutz bietenden, Gehäuses anzuordnen, wobei das Gehäuse vorteilhaft am Fahrzeug angeordnet werden kann und/oder bevorzugt so ausgeführt ist, dass die Datenerfassungseinheit, insbesondere die Speichereinheit, leicht zugänglich ist.

Den Satellitensignalempfänger betreffend ist eine vorteilhafte Anordnung am Fahrzeug so wie es erfindungsgemäß vorgesehen ist.

Das heißt, dass der Satellitensignalempfänger an der Oberseite eines an einer Vorderradgabel angebrachten Kotflügels angeordnet ist und gleichzeitig so wenig wie möglich von der Fahrerin und/oder von Bauteilen des Fahrzeugs verdeckt wird.

Es ist besonders bevorzugt vorgesehen, dass der Satellitensignalempfänger zentral oberhalb des Kotflügels angeordnet ist.

Es ist bevorzugt vorgesehen, dass der Satellitensignalempfänger ein Teilelement einer Koordinatenbestimmungseinheit ist, wobei die Koordinatenbestimmungseinheit am Fahrzeug, insbesondere lösbar, befestigbar und/oder befestigt ist.

Die Koordinatenbestimmungseinheit und/oder der Satellitensignalempfänger selbst kann dabei am Kotflügel und/oder einem dazu naheliegenden Bauteil, beispielsweise einem Abdeckungselement, insbesondere lösbar, befestigt sein.

Für die Befestigung der Koordinatenbestimmungseinheit und/oder des Satellitensignalempfängers ist wenigstens eine erste Befestigungsvorrichtung vorgesehen, welche dazu ausgebildet ist, die Koordinatenbestimmungseinheit und/oder den Satellitensignalempfänger am Kotflügel und/oder einem dazu naheliegenden Bauteil, beispielsweise einem Abdeckungselement, zu befestigen.

Für die Befestigung der Speichereinheit, falls diese separat von dem Satellitensignalempfänger ausgeführt ist, ist günstigerweise wenigstens eine zweite Befestigungsvorrichtung vorgesehen, die dazu ausgebildet ist, die Speichereinheit, insbesondere lösbar, an einem Gabelholm und/oder an einer Gabelbrücke und/oder an einem Lenker und/oder einem Abdeckungselement zu befestigen.

Die erste Befestigungsvorrichtung und/oder die zweite Befestigungsvorrichtung sind vorzugsweise so ausgeführt, dass die Fahrerin und/oder die Verwenderin die Koordinatenbestimmungseinheit und/oder den Satellitensignalempfänger und/oder die Speichereinheit selbst befestigen und/oder vom Fahrzeug lösen kann.

Die erste Befestigungsvorrichtung und/oder die zweite Befestigungsvorrichtung umfassen günstigerweise jeweils wenigstens ein Band und/oder eine Lasche und/oder eine Schlaufe oder dergleichen, insbesondere mit elastischen Eigenschaften, wie beispielsweise Haltegummis.

Weiters können die erste Befestigungsvorrichtung und/oder die zweite Befestigungsvorrichtung jeweils wenigstens einen Verschluss umfassen, der dazu ausgebildet ist, die erste Befestigungsvorrichtung und/oder die zweite Befestigungsvorrichtung am Fahrzeug zu befestigen.

Es ist denkbar, dass die erste und/oder zweite Befestigungsvorrichtung so ausgebildet ist, dass die Speichereinheit und/oder die Koordinatenbestimmungseinheit und/oder der Satellitensignalempfänger an einem Zubehörteil, beispielsweise einer Tasche oder einem Rahmenelement, befestigt werden können.

Es ist weiters denkbar, dass die erste Befestigungsvorrichtung und/oder die zweite Befestigungsvorrichtung auch stoffschlüssig, beispielsweise durch Kleben, und/oder mittels Schrauben an dem Fahrzeug befestigt werden können.

Ein weiterer Vorteil der bevorzugten separaten Ausführung des Satellitensignalempfängers und der Speichereinheit ist, dass die Anordnung des Satellitensignalempfängers und der Speichereinheit den Gegebenheiten des Fahrzeugs angepasst werden können.

Unter Gegebenheiten des Fahrzeugs sind beispielsweise die Geometrie der Abdeckungselemente und/oder des Kotflügels und/oder des Lenkers und/oder der Gabel und/oder der das Platzangebot zwischen der Startnummerntafel und/oder Lichtmaske und/oder der Gabelholme und dergleichen zu verstehen.

So besteht zum Beispiel die Möglichkeit, die Datenerfassungseinheit für unterschiedliche Fahrzeuge zu verwenden.

Das heißt auch, dass die Datenerfassungseinheit ein Zubehör- und/oder Nachrüst-Gegenstand sein kann.

Es ist bevorzugt vorgesehen, dass die Speichereinheit und die Koordinatenbestimmungseinheit und/oder der Satellitensignalempfänger miteinander datenverbunden sind.

Das heißt, dass günstigerweise eine wechselseitige Datenübertragung zwischen der Koordinatenbestimmungseinheit und/oder dem Satellitensignalempfänger und der Speichereinheit, betreffend insbesondere die Satellitensignaldaten, welche durch den Satellitensignalempfänger empfangen werden können, stattfinden kann.

Die Datenverbindung zwischen der Speichereinheit und der Koordinatenbestimmungseinheit und/oder dem Satellitensignalempfänger besteht vorzugsweise durch ein, insbesondere lösbares, Datenkabel.

Des Weiteren kann die Datenverbindung zwischen der Koordinatenbestimmungseinheit und/oder dem Satellitensignalempfänger und der Speichereinheit drahtlos über ein Signal, beispielsweise mittels eines W-Lan-Signals und/oder Bluetooth-Signals und dergleichen mehr, bestehen.

Wenn die Datenverbindung zwischen der Koordinatenbestimmungseinheit und/oder dem Satellitensignalempfänger und der Speichereinheit über ein drahtloses Signal besteht, ist es bevorzugt vorgesehen, dass die Koordinatenbestimmungseinheit und/oder der Satellitensignalempfänger und die Speichereinheit so ausgeführt sind, dass sie die Daten, vorzugsweise wechselseitig, drahtlos übertragen werden können.

Es ist besonders bevorzugt vorgesehen, dass die Datenerfassungseinheit wenigstens eine Schnittstelle besitzt, die zur Datenübertragung von und/oder zu wenigstens einem externen Sender und/oder Empfänger und/oder zur Steuereinheit des Fahrzeugs dient.

Ein externer Sender und/oder Empfänger kann beispielsweise ein Computer und/oder ein Smartphone und/oder ein Tablet und/oder ein Notebook und/oder ein Server sein.

Für die Datenübertragung an einen externen Sender und/oder Empfänger ist insbesondere eine kabellose Datenübertragung mittels wenigstens eines Signals vorgesehen.

Es kann aber auch ein lösbares Datenkabel für die Datenübertragung an einen externen Sender und/oder Empfänger vorgesehen sein.

Für die Datenübertragung zwischen dem Fahrzeug und der Datenerfassungseinheit ist vorzugsweise ein Datenkabel vorgesehen.

In diesem Zusammenhang ist es vorteilhaft, die Speichereinheit in der Nähe des Datenanschlusses des Fahrzeugs anzuordnen.

Der Datenanschluss eines einspurigen Fahrzeugs befindet sich dabei bevorzugt im Bereich unterhalb des Lenkers und/oder vor der Vorderradgabel, insbesondere im Bereich der Gabelbrücken.

Es kann vorgesehen sein, dass die Datenerfassungseinheit wenigstens eine Leuchte, insbesondere zum Anzeigen von Zuständen das Fahrzeug betreffend und/oder die Datenerfassungseinheit betreffend, besitzt.

Es ist weiters bevorzugt vorgesehen, dass die Speichereinheit einen Speicher besitzt, der Daten das Fahrzeug und/oder die Umgebung betreffend speichern kann.

Der Speicher kann dabei externe Daten und/oder die von der Datenerfassungseinheit mittels der Sensoren und/oder des Satellitensignalempfängers empfangenen Daten speichern.

Die Speichereinheit besitzt vorzugsweise wenigstens einen Schalter, der zumindest dazu dient, die Datenerfassungseinheit ein- und/oder auszuschalten.

Es ist auch denkbar, dass der wenigstens eine Schalter eine Rückstellfunktion und/oder eine Steuer- oder Regelfunktion besitzt.

Es ist auch denkbar, dass der wenigsten eine Schalter Funktionen besitzt, welche die Funktion der Datenerfassungseinheit beeinflussen.

Es ist bevorzugt vorgesehen, dass die Datenerfassungseinheit mittels des wenigstens einen Schalters zumindest bei der Erstverwendung eingeschalten ist.

Es ist bevorzugt vorgesehen, dass die Datenerfassungseinheit wenigstens einen lösbaren Stromanschluss zu dem Fahrzeug besitzt, der insbesondere während dem Betrieb der Datenerfassungseinheit besteht.

Das heißt, es ist bevorzugt vorgesehen, dass beim Betrieb der Datenerfassungseinheit ein Stromkabel an der Datenerfassungseinheit, insbesondere an der Speichereinheit, und an dem Fahrzeug angeschlossen ist.

Es ist möglich, dass die Datenerfassungseinheit einen Stromspeicher besitzt, der mittels eines lösbaren Stromanschlusses, insbesondere temporär, an das Fahrzeug und/oder an einer externen Stromquelle angeschlossen ist.

Es ist bevorzugt vorgesehen, dass die Koordinatenbestimmungseinheit und/oder der Satellitensignalempfänger und die Speichereinheit durch ein Stromkabel lösbar miteinander verbunden sind.

Es ist auch möglich, dass die Koordinatenbestimmungseinheit und/oder der Satellitensignalempfänger und/oder die Speichereinheit einen Stromspeicher und/oder einen lösbaren Stromanschluss besitzen.

Wenn die Koordinatenbestimmungseinheit und/oder der Satellitensignalempfänger und die Speichereinheit drahtlos mittels eines Signals miteinander verbunden sind, kann es sinnvoll sein, dass die Koordinatenbestimmungseinheit und/oder der Satellitensignalempfänger und die Speichereinheit jeweils einen Stromspeicher und einen lösbaren Stromanschluss besitzen.

Es ist bevorzugt vorgesehen, dass die Datenerfassungseinheit wenigstens eine Übertragungsvorrichtung, insbesondere wenigstens einen Kabeleingang und/oder einen Kabelausgang umfassend, zur Übertragung von Strom und/oder Daten betreffend das Fahrzeug und/oder Daten betreffend die Umgebung aufweist.

Es ist bevorzugt vorgesehen, dass die Datenerfassungseinheit Übertragungsvorrichtungen zum Senden und/oder Empfangen der Daten und/oder des Stroms umfasst.

Unter Übertragungsvorrichtungen können Kabeleingänge, Kabelausgänge, Antennen, Emitter oder dergleichen mehr verstanden werden.

Es ist bevorzugt vorgesehen, dass die Datenerfassungseinheit, vorzugsweise die Speichereinheit, wenigstens eine Recheneinheit aufweist, welche dazu geeignet ist, die erfassten Daten zu verarbeiten und/oder auszuwerten und/oder Funktionen der Datenerfassungseinheit zu regeln oder zu steuern.

Es kann auch vorgesehen sein, dass die wenigstens eine Recheneinheit zum Erstellen von Statistiken aus den erfassten und/oder vom Fahrzeug empfangenen Daten ausgebildet ist.

Die Recheneinheit kann dem Datenaustausch mit einem Programm und/oder einer Anwendung, wie z. B. einer Software auf einem Computer und/oder einer App auf einem Smartphone, dienen.

Ein Programm und/oder eine Anwendung, insbesondere eine Smartphone-App, kann, insbesondere mittels der Recheneinheit, zum Bedienen, insbesondere für die Konfiguration, der Datenerfassungseinheit genutzt werden.

Des Weiteren kann ein Programm und/oder eine Anwendung, insbesondere eine Smartphone-App, zur Darstellung, insbesondere grafisch und/oder tabellarisch, der von der Datenerfassungseinheit erfassten und/oder verarbeiteten und/oder ausgewerteten Daten verwendet werden.

Die Darstellung der Daten kann beispielsweise dafür genutzt werden, eine Fahrt mit einem erfindungsgemäßen Fahrzeug zu analysieren und/oder mit wenigstens einer anderen Fahrt zu vergleichen.

Es ist bevorzugt vorgesehen, dass das Verfahren zum Betreiben einer Datenerfassungseinheit die folgenden Verfahrensschritte umfasst, insbesondere falls die Speichereinheit und der Satellitensignalempfänger separat voneinander ausgeführt sind:
- die räumliche Anordnung der Speichereinheit über dem Kotflügel, insbesondere im Bereich zwischen dem wenigstens einen Gabelholm und/oder einem Abdeckungselement, und/oder
- die, insbesondere lösbare, Befestigung der Speichereinheit am Fahrzeug, insbesondere an einem Gabelholm, und/oder
- die, insbesondere lösbare, Befestigung der Koordinatenbestimmungseinheit und/oder des Satellitensignalempfängers am Fahrzeug, insbesondere an der Oberseite des Kotflügels, und/oder
- die Herstellung der wenigstens einen, insbesondere lösbaren, Verbindung, insbesondere der Datenverbindung und/oder der Stromverbindung, zwischen der Koordinatenbestimmungseinheit und/oder dem Satellitensignalempfänger und der Speichereinheit, und/oder
- die Herstellung der wenigstens einen, insbesondere lösbaren, Verbindung, insbesondere der Datenverbindung und/oder der Stromverbindung, zwischen der Datenerfassungseinheit und dem Fahrzeug, und/oder
- die Herstellung der wenigstens einen, insbesondere lösbaren, Verbindung, insbesondere der Datenverbindung und/oder der Stromverbindung, zwischen der Datenerfassungseinheit und einem externen Gerät, und/oder
- der Betätigung des Schalters, zumindest bei der ersten Verwendung nach dem Verbinden des Stromanschlusses der Speichereinheit und/oder des Stromanschlusses der Koordinatenbestimmungseinheit und/oder des Satellitensignalempfängers, sodass die Datenerfassungseinheit eingeschalten ist, und/oder
- die Herstellung der Datenverbindung zwischen der Datenerfassungseinheit und einem Programm und/oder einer Anwendung, zumindest bei der ersten Verwendung nach dem Verbinden des Stromanschlusses der Speichereinheit und/oder des Stromanschlusses der Koordinatenbestimmungseinheit und/oder des Satellitensignalempfängers, und/oder
- die Konfiguration und/oder die Anpassung der Datenerfassungseinheit, insbesondere mithilfe eines Programms und/oder einer Anwendung, zumindest bei der ersten Verwendung der Datenerfassungseinheit.

Weitere Vorteile und Einzelheiten der Erfindung ergeben sich aus den Figuren sowie der dazugehörigen Figurenbeschreibung. Dabei zeigen:
- Fig. 1: ein Ausführungsbeispiel eines erfindungsgemäßen Fahrzeugs,
- Fig. 2: Teilelemente eines erfindungsgemäßen Fahrzeugs,
- Fig. 3: ein Ausführungsbeispiel einer Datenerfassungseinheit, und
- Fig. 4: eine Ansicht einer Speichereinheit an einem Gabelholm.

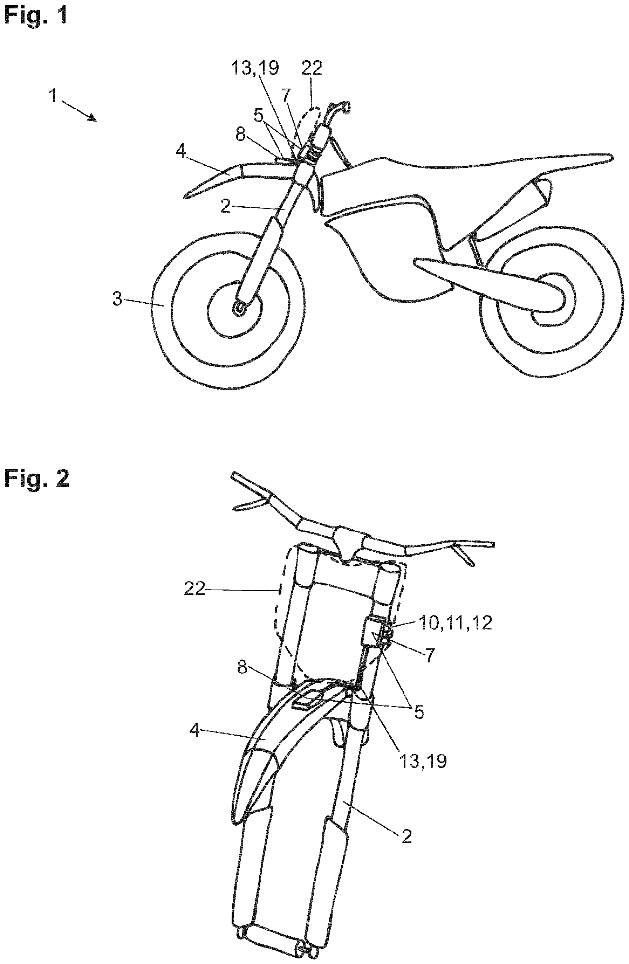

Die Figur 1 zeigt eine Seitenansicht eines Ausführungsbeispiels eines erfindungsgemäßen Fahrzeugs 1, bei dem der Satellitensignalempfänger 8 an der Oberseite des Kotflügels 4 befestigt ist und günstigerweise eine Speichereinheit 7 an der Vorderradgabel 2 befestigt ist.

Da es auch möglich ist, dass das Fahrzeug 1 kein Motorrad, sondern ein Schnee-Motorrad, (E-)Fahrrad oder ein Schnee-(E-)Fahrrad ist, ist nicht zwingenderweise ein Vorderrad 3 vorhanden. In besonders bevorzugten Ausführungsformen ist aber ein Vorderrad 3 vorhanden.

Eine Aufgabe des Satellitensignalempfängers 8 ist es, Satellitensignale, beispielsweise GNSS-Signale, zu empfangen und/oder auszuwerten.

Besonders bevorzugt ist es vorgesehen, dass der Satellitensignalempfänger 8 die erfassten Satellitensignaldaten an die Speichereinheit 7 übermittelt, wo eine weitere Datenspeicherung und/oder -verarbeitung erfolgt.

Die Datenerfassungseinheit 5 ist dazu ausgebildet, die erfassten Satellitensignaldaten an ein externes Gerät zu übermitteln, wo eine weitere Datenspeicherung und/oder - verarbeitung erfolgen kann.

Das Ausführungsbeispiel zeigt des Weiteren eine vorteilhafte Anordnung der Speichereinheit 7 in einem von externen Einflüssen geschützten Bereich, insbesondere hinter einem Abdeckungselement 22, vorzugsweise zwischen dem Abdeckungselement 22 und der Vorderradgabel 2.

Die Speichereinheit 7 kann z.B. aber auch im Bereich rund um den Satellitensignalempfänger 8 angeordnet sein.

Es ist auch denkbar, dass sich der Satellitensignalempfänger 8 und die Speichereinheit 7 ein gemeinsames Gehäuse teilen.

Aufgrund der bevorzugten Lösbarkeit der ersten Befestigungsvorrichtung 9 des Satellitensignalempfängers 8 und der zweiten Befestigungsvorrichtung 10 der Speichereinheit 7, insbesondere falls diese vorhanden und separat ausgeführt ist, ist eine optimale Anordnung im Sinne von gegebenem Schutz und/oder Einfachheit der Befestigung und/oder Abstimmung auf die Geometrie des Kotflügels 4 und/oder Abdeckungselements 22 möglich.

Die Figur 2 zeigt Teilelemente eines erfindungsgemäßen Fahrzeugs 1, wobei der Satellitensignalempfänger 8 zentral an der Oberseite des Kotflügels 4 angeordnet und/oder befestigt ist.

Vorteilhaft ist diesbezüglich eine Anordnung in der Nähe eines Abdeckungselements 22, sodass zumindest eine teilweise Schutzwirkung vor externen Einflüssen besteht.

Allenfalls ist es besonders vorteilhaft vorgesehen, dass dabei auch die Abschattung des Satellitensignalempfängers 8 durch Teilelemente des Fahrzeugs 1 und/oder durch die Fahrerin so gering wie möglich ist.

Es ist auch möglich, dass der Satellitensignalempfänger 8 an einem Abdeckungselement 22 angeordnet und/oder befestigt ist.

Wie in Fig. 2 ersichtlich, ist die Anordnung der Speichereinheit 7 besonders bevorzugt an einem Gabelholm im Wesentlichen oberhalb des Kotflügels 4 und/oder zwischen den zwei Gabelbrücken.

So ist die Speichereinheit 7 günstigerweise leicht zugänglich und kann einfach befestigt und/oder gelöst und/oder bedient werden.

Weiters ist es aufgrund dieser bevorzugten Anordnung einfach, die wenigstens eine Übertragungsvorrichtung 20 und/oder den Stromanschluss 18 und/oder die wenigstens eine Schnittstelle 14 und/oder den Schalter 17 zu erreichen und/oder die wenigstens eine Leuchte 16 einzusehen.

Das zwischen der Speichereinheit 7 und dem Satellitensignalempfänger 8 angeschlossene Datenkabel 13 und/oder das Stromkabel 19, ist bevorzugt so angeordnet, dass es zumindest teilweise vor äußeren Einflüssen geschützt ist.

Weiters ist die Länge des Datenkabels 13 und/oder des Stromkabels 19 bevorzugt so vorgesehen, dass eine einfache lösbare Anbringung der Datenerfassungseinheit 5, insbesondere in Abstimmung mit der Geometrie des Fahrzeugs 1 und/oder des Kotflügels 4 und/oder der Gabel 2 und/oder eines Abdeckungselements 22 und/oder der Position der Speichereinheit 7 und/oder des Satellitensignalempfängers 8 möglich ist.

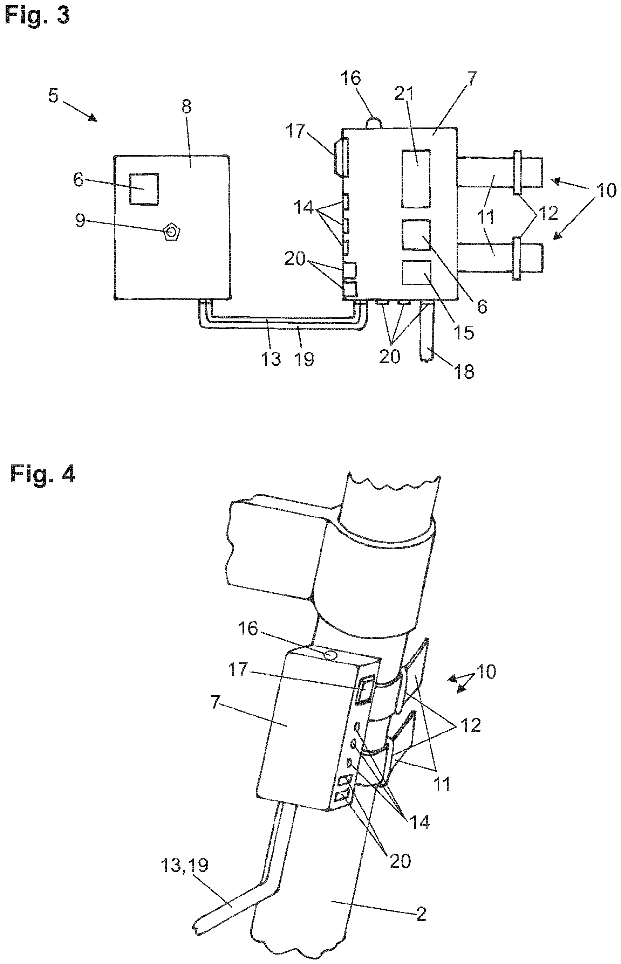

Die Figur 3 zeigt ein Ausführungsbeispiel einer Datenerfassungseinheit 5 günstigerweise mit einer Speichereinheit 7, wobei die Speichereinheit 7 und der Satellitensignalempfänger 8 separat voneinander ausgeführt und durch ein Datenkabel 13 und ein Stromkabel 19 miteinander verbunden sind.

Alternativ ist bei einer separaten Ausführung des Satellitensignalempfängers 8 und der Speichereinheit 7 eine Datenerfassungseinheit 5 ohne Datenkabel 13 möglich, wobei die Datenübertragung mittels eines Signals erfolgt.

Bei einer Datenübertragung mittels eines Signals ist zumindest die Anordnung von wenigstens einer weiteren Übertragungsvorrichtung 20 und/oder von wenigstens einer Schnittstelle 14 am Satellitensignalempfänger 8 vorgesehen.

Weiters ist eine Datenerfassungseinheit 5 ohne ein Stromkabel 19 zwischen der Speichereinheit 7 und dem Satellitensignalempfänger 8 möglich.

Hierzu ist günstigerweise zumindest ein Stromspeicher und ein Stromanschluss 18 am Satellitensignalempfänger 8 vorgesehen.

Des Weiteren zeigt die Fig. 3 einen Stromanschluss 18, welcher vorteilhafterweise dazu ausgebildet ist, mit einem Kabel lösbar an einem Fahrzeug 1 und/oder an eine externe Stromquelle angeschlossen zu sein.

Besonders bevorzugt ist es vorgesehen, dass der Stromanschluss 5 während der Benutzung des Fahrzeugs 1 mit dem Fahrzeug 1 mit einem Kabel verbunden ist, sodass die Datenerfassungseinheit 5 den Strom vom Fahrzeug 1 bezieht.

Alternativ ist es möglich, dass die Datenerfassungseinheit 5, insbesondere die Speichereinheit 7, einen Stromspeicher aufweist.

Wenn die Datenerfassungseinheit 5 einen Stromspeicher besitzt, ist es vorgesehen, dass der Stromanschluss 14 zumindest temporär an einem Fahrzeug 1 oder an eine externe Stromquelle angeschlossen ist.

Bevorzugt umfasst der Stromanschluss 18 zur Stromübertragung ein Kabel.

Es sind aber auch kabellose und/oder induktive Mechanismen zur Stromübertragung denkbar.

In diesem Ausführungsbeispiel ist die wenigstens eine erste Befestigungsvorrichtung 9 des Satellitensignalempfängers 8 wenigstens eine Schraube.

Es sind jedoch auch andere Befestigungsmittel möglich, wie beispielsweise wenigstens ein Band 11, vorzugsweise mit wenigstens einem Verschluss 12 und/oder eine stoffschlüssige Verbindung, z. B. mithilfe eines Klebstoffs.

Die wenigstens eine zweite Befestigungsvorrichtung 10 der Speichereinheit 7, insbesondere falls diese vorhanden und separat ausgeführt ist, ist besonders bevorzugt ein, vorzugsweise elastisches, Band 11 mit einem Verschluss 12.

Es sind jedoch auch andere Befestigungsmittel möglich, beispielsweise umfassend wenigstens ein Formteil und/oder wenigstens ein Klemmelement und/oder wenigstens eine Schraube und/oder wenigstens eine Feder.

In diesem Ausführungsbeispiel sind die Speichereinheit 7 und der Satellitensignalempfänger 8 selbst am Fahrzeug 1 befestigt.

Es ist aber auch möglich, dass die Speichereinheit 7 und/oder der Satellitensignalempfänger 8 innerhalb eines Gehäuses angeordnet ist, wobei das Gehäuse am Fahrzeug 1 befestigt ist.

Die Fig. 3 zeigt weiters wenigstens einen Sensor 6, welcher als Teil des Satellitensignalempfängers 8 und/oder der Speichereinheit 7 ausgeführt sein kann.

Der wenigstens eine Sensor 6 kann jegliche Art von Sensor sein, wobei er insbesondere zur Erfassung für eine Auswertung erforderlicher Daten betreffend das Fahrzeug 1 und/oder die Umgebung ausgebildet ist.

Die wenigstens eine bevorzugte Leuchte 16 ist besonders bevorzugt an der Speichereinheit 7 angeordnet, kann sich aber überall an der Datenerfassungseinheit 5 befinden.

Es ist auch möglich, dass es mehrere Leuchten 16 gibt, welche unterschiedliche Informationen und/oder Funktionen betreffen und/oder unterschiedlich leuchten.

Der wenigstens eine bevorzugte Schalter 17 ist vorzugsweise so an der Datenerfassungseinheit 5, vorzugsweise an der Speichereinheit 7, angeordnet, sodass er leicht betätigt werden kann.

Bevorzugt sind wenigstens eine Leuchte 16, wenigstens ein Schalter 17, wenigstens eine Schnittstelle 14, wenigstens eine Übertragungsvorrichtung 20 und wenigstens ein Stromanschluss 18 an der Speichereinheit 7 angeordnet, wobei diese dann bevorzugt aufgrund der besseren Erreichbarkeit und/oder besseren Einsicht am Gabelholm befestigt ist.

Wie weiters im Ausführungsbeispiel der Fig. 3 ersichtlich ist, ist der wenigstens eine Speicher 15 besonders bevorzugt in der Speichereinheit 7 angeordnet.

Weiters ist die bevorzugte Recheneinheit 21 besonders bevorzugt in der Speichereinheit 7 angeordnet.

Es ist auch denkbar, dass der wenigstens eine Speicher 15 und/oder die Recheneinheit 15 im Satellitensignalempfänger 8 angeordnet ist.

### Bezugszeichenliste:

- 1: Erfindungsgemäßes Fahrzeug
- 2: Vorderradgabel
- 3: Vorderrad
- 4: Kotflügel
- 5: Datenerfassungseinheit
- 6: Sensor
- 7: Speichereinheit
- 8: Satellitensignalempfänger
- 9: Erste Befestigungsvorrichtung
- 10: Zweite Befestigungsvorrichtung
- 11: Band
- 12: Verschluss
- 13: Datenkabel
- 14: Schnittstelle
- 15: Speicher
- 16: Leuchte
- 17: Schalter
- 18: Stromanschluss
- 19: Stromkabel
- 20: Übertragungsvorrichtung
- 21: Recheneinheit
- 22: Abdeckungselement

## Patentansprüche

1. Fahrzeug (1), insbesondere einspuriges Fahrzeug, aufweisend
- wenigstens eine Vorderradgabel (2), geeignet zum Lagern eines Vorderrads (3),
- wenigstens einen Kotflügel (4), der an der Vorderradgabel (2) angebracht ist,
- eine Datenerfassungseinheit (5) mit zumindest einem Sensor (6) zur Erfassung von Daten betreffend das Fahrzeug (1) und/oder die Umgebung,
**dadurch gekennzeichnet, dass** die Datenerfassungseinheit (5) einen an einer Oberseite des Kotflügels (4) vor der Vorderradgabel (2), vorzugsweise im Wesentlichen zentral, angeordneten Satellitensignalempfänger (8) umfasst.

2. Fahrzeug (1) nach dem vorhergehenden Anspruch, **dadurch gekennzeichnet, dass** der Satellitensignalempfänger (8) oberhalb des Kotflügels (4) und/oder am Kotflügel (4), vorzugsweise lösbar, befestigt ist.

3. Fahrzeug (1) nach einem der vorhergehenden Ansprüche, **dadurch gekennzeichnet, dass** der Satellitensignalempfänger (8) wenigstens eine erste Befestigungsvorrichtung (9) besitzt, welche dazu ausgebildet ist, den Satellitensignalempfänger (8) oberhalb des Kotflügels (4) und/oder am Kotflügel (4), vorzugsweise lösbar, zu befestigen.

4. Fahrzeug (1) nach einem der vorhergehenden Ansprüche, **dadurch gekennzeichnet, dass** die Datenerfassungseinheit (5) eine Speichereinheit (7) aufweist.

5. Fahrzeug (1) nach Anspruch 4, **dadurch gekennzeichnet, dass** die Speichereinheit (7) und der Satellitensignalempfänger (8) separat voneinander ausgeführt und/oder angeordnet sind.

6. Fahrzeug (1) nach einem der Ansprüche 4 oder 5, **dadurch gekennzeichnet, dass** die Speichereinheit (7) wenigstens eine zweite Befestigungsvorrichtung (10) besitzt, welche dazu ausgebildet ist, die Speichereinheit (7) am Fahrzeug (1), vorzugsweise lösbar, zu befestigen.

7. Fahrzeug (1) nach Anspruch 6, **dadurch gekennzeichnet, dass** die wenigstens eine zweite Befestigungsvorrichtung (10) dazu ausgebildet ist, die Speichereinheit (7) an einer Vorderradgabel (2), insbesondere an einem Gabelholm, vorzugsweise lösbar, zu befestigen.

8. Fahrzeug (1) nach einem der Ansprüche 4 bis 7, **dadurch gekennzeichnet, dass** die Speichereinheit (7) und der Satellitensignalempfänger (8), vorzugsweise durch ein lösbares Datenkabel (13), insbesondere zum wechselseitigen Übertragen erfasster Daten, miteinander datenverbunden sind.

9. Fahrzeug (1) nach einem der vorhergehenden Ansprüche, **dadurch gekennzeichnet, dass** die Datenerfassungseinheit (5) eine Schnittstelle (14) zum Übertragen externer und/oder der erfassten und/oder vom Fahrzeug empfangenen Daten aufweist, insbesondere zum Übertragen von Daten an einen externen Empfänger und/oder zum Empfangen von Daten von einem externen Sender.

10. Fahrzeug (1) nach Anspruch 9, **dadurch gekennzeichnet, dass** die Schnittstelle (14) zur drahtlosen Übertragung von Daten, insbesondere gemäß dem W-Lan-Standard und/oder Bluetooth-Standard, ausgebildet ist.

11. Fahrzeug (1) nach einem der Ansprüche 4 bis 10, **dadurch gekennzeichnet, dass** die Speichereinheit (7) wenigstens einen Speicher (15) zur Speicherung der von dem Satellitensignalempfänger (8) und/oder dem wenigstens einen Sensor (6) erfassten Daten und/oder den extern empfangenen Daten aufweist.

12. Fahrzeug (1) nach einem der vorhergehenden Ansprüche, **dadurch gekennzeichnet, dass** die Datenerfassungseinheit (5) wenigstens einen lösbaren Stromanschluss (18) zum Fahrzeug (1) und/oder zu einer Stromquelle besitzt.

13. Fahrzeug (1) nach einem der Ansprüche 4 bis 12, **dadurch gekennzeichnet, dass** die Speichereinheit (7) und der Satellitensignalempfänger (8) durch ein Stromkabel (19), insbesondere lösbar, miteinander verbunden sind.

14. Datenerfassungseinheit (5) mit zumindest einem Sensor (6) zur Erfassung von Daten betreffend ein, insbesondere einspuriges, Fahrzeug (1) und/oder die Umgebung, bestehend aus einer Speichereinheit (7) und einem Satellitensignalempfänger (8), **dadurch gekennzeichnet, dass** der Satellitensignalempfänger (8), vorzugsweise separat von der Speichereinheit (7), an einer Oberseite des Kotflügels (4) vor der Vorderradgabel (2), vorzugsweise im Wesentlichen zentral, angeordnet ist.

15. Verwendung einer Datenerfassungseinheit (5) nach Anspruch 14 bei einem Fahrzeug (1), insbesondere nach einem der Ansprüche 1 bis 13.

16. Verfahren zum Betreiben einer Datenerfassungseinheit (5) nach Anspruch 14 bei einem Fahrzeug, wobei der Satellitensignalempfänger (8)
- räumlich getrennt von der Speichereinheit (7) am Fahrzeug (1) angeordnet wird, und
- an einer Oberseite eines Kotflügels (4) vor der Vorderradgabel (2), vorzugsweise im Wesentlichen zentral, angeordnet wird.
